# DEMANDE DE BREVET EUROPEEN

(11) **EP 2 431 901 A1**
(43) Date de publication de la demande: **21.03.2012**
(21) Numéro de dépôt: 11181475.2
(22) Date de dépôt: 15.09.2011
(51) Int. Cl.: G06F 21/00, G07F 7/10

(54) **Dispositif de protection, procédé et produit programme d'ordinateur correspondant**

(30) Priorité: 15.09.2010 FR 1057385
(71) Demandeur: Compagnie Industrielle et Financière d'Ingénierie "Ingenico", 92200 Neuilly sur Seine (FR)
(72) Inventeur: Rossi, Laurent, 28100 Dreux (FR); Schang, Bernard, 78320 Le Mesnil Saint Denis (FR)
(74) Mandataire: Le Saux, Gaël

(57) **Abrégé**

L'invention concerne un dispositif de protection d'un terminal de paiement électronique comprenant au moins un circuit imprimé 10 et un boîtier, dispositif de protection.

Selon l'invention, un tel dispositif comprend :
- au moins un détecteur capacitif 13 comprenant deux parties (13', 13"), ladite première partie 13' étant reliée électriquement audit circuit imprimé 10, ladite deuxième partie 13" étant montée au sein dudit boîtier dudit terminal de paiement électronique sans être reliée électriquement à ladite première partie 13', ledit au moins un détecteur capacitif 13 étant configuré pour délivrer une capacité de référence lorsqu'il est monté dans ledit terminal de paiement électronique ;
- un microprocesseur de mesure capacitive relié électriquement audit au moins un détecteur capacitif, configuré pour détecter une variation de capacité dudit au moins un détecteur capacitif ;
- des moyens de transmission d'une information représentative de ladite variation de capacité, lorsque une valeur absolue d'une différence entre ladite capacité mesurée et ladite capacité de référence excède un seuil prédéterminé.

## Description

### 1 DOMAINE DE L'INVENTION

La présente invention se rapporte au domaine de la sécurisation de dispositifs de paiement.

La présente invention se rapporte plus particulièrement à un dispositif permettant de détecter une intrusion ou une ouverture d'un terminal de paiement électronique, ayant pour objectif l'obtention frauduleuse de données confidentielles, telles que des données bancaires.

De nombreux dispositifs permettent à des utilisateurs de régler des achats. Plus particulièrement, les dispositifs de paiement utilisant des cartes bancaires telles que des cartes à puce ou des cartes à bande magnétique se sont généralisés. Ces dispositifs sont généralement appelés terminaux de paiement et permettent de régler des achats de manière simple et rapide. D'autres dispositifs utilisent également les cartes à puce ou à bande : il s'agit par exemple de terminaux bancaires tels que des guichets automatisés ou des distributeurs automatiques de billets. Par la suite, l'ensemble de ces dispositifs, qui comprennent à la fois un clavier de saisie et un lecteur de carte à mémoire sont appelés terminaux de paiement.

Du fait des données manipulées, les terminaux de paiement suscitent l'attention des fraudeurs. Ceux-ci tentent, par tous les moyens, d'avoir accès aux données confidentielles qui sont échangées dans les terminaux.

Une des voies d'accès à ces données consiste à introduire un mouchard dans le terminal. Ce mouchard est utilisé pour récupérer des données échanger entre le terminal et la carte bancaire pour réaliser une copie de ces données confidentielles dans le but de contrefaire des cartes de paiement.

### 2 SOLUTIONS DE L'ART ANTERIEUR

Tous les fournisseurs de terminaux de paiement et un certain nombre de fournisseurs tiers sont en mesure de fournir des solutions anti-intrusion plus ou moins efficaces.

En effet, les fraudeurs redoublent d'ingéniosité lorsqu'il s'agit de contourner telle ou telle mesure de protection.

Pour des raisons de sécurité évidentes l'ouverture d'un terminal de paiement électronique ou l'intrusion d'un corps étranger dans un terminal de paiement électronique ou encore l'assemblage d'un terminal sont des opérations qui ne peuvent pas être autorisées.

Parmi les mesures anti-intrusion proposées, on peut citer la mise en oeuvre de fausses touches, qui sont utilisées pour détecter l'ouverture du terminal. Lorsque le terminal est monté, le clavier du terminal exerce une pression sur des fausses touches, qui sont donc en contact permanent avec le circuit imprimé. Lorsque le clavier est ôté, les fausses touches ne sont plus en contact avec le circuit imprimé et le processeur de sécurité active les mesures de protection requises. L'un des problèmes de ces fausses touches est lié au fait qu'il faut prévoir des parties mécaniques supplémentaires sur le support de clavier pour détecter le démontage du clavier. Ces parties mécaniques supplémentaires ont un coup.

On peut également citer la mise en oeuvre de treillis de protection des circuits imprimés pour empêcher l'insertion de sondes. Une sonde se présente généralement sous la forme d'un mince fil métallique, quasiment invisible, qui est inséré dans le terminal de paiement électronique par la fente d'insertion de la carte bancaire pour accéder aux contacts entre la carte bancaire et le lecteur de carte (ces contacts sont également appelés « pins »).

De nombreuses autres mesures existent. Elles ne sont cependant pas toujours efficaces.

Une solution de protection envisageable consiste également à éviter le remontage d'un terminal à partir de pièces appartenant à d'autres terminaux. Cette solution de sécurisation intervient lorsque des fraudeurs tentent de fabriquer ou de remonter un terminal. Il s'agit d'un problème complémentaire à celui de l'intrusion.

A ce jour aucune solution n'a permis de résoudre totalement ce problème, à un coût jugé raisonnable. En effet, l'identification des composants des terminaux est théoriquement possible. Pour ce faire, il faudrait munir chaque composant d'un identifiant, par exemple RFID, et indiquer, à un processeur de sécurité installé dans le terminal, la liste des identifiants des composants du terminal. Outre le fait que cette opération est complexe, elle est aussi onéreuse puisque les tags RFID permettant d'identifier les composants augmentent le prix du terminal de manière non négligeable. Or il est important de fournir des terminaux de paiement dans lesquels les utilisateurs peuvent avoir confiance, terminaux qui ne soient pas pour autant trop onéreux à produire.

### 3 RESUME DE L'INVENTION

L'invention ne présente pas les inconvénients de l'art antérieur. En effet, l'invention concerne un dispositif de protection d'un terminal de paiement électronique comprenant au moins un circuit imprimé et un boîtier, dispositif de protection caractérisé en ce qu'il comprend :
- au moins un détecteur capacitif comprenant deux parties, ladite première partie étant reliée électriquement audit circuit imprimé, ladite deuxième partie étant montée au sein dudit boîtier dudit terminal de paiement électronique sans être reliée électriquement à ladite première partie, ledit au moins un détecteur capacitif étant configuré pour délivrer une capacité de référence lorsqu'il est monté dans ledit terminal de paiement électronique ;
- un microprocesseur de mesure capacitive relié électriquement audit au moins un détecteur capacitif, configuré pour détecter une variation de capacité dudit au moins un détecteur capacitif ;
- des moyens de transmission d'une information représentative de ladite variation de capacité, lorsque une valeur absolue d'une différence entre ladite capacité mesurée et ladite capacité de référence excède un seuil prédéterminé.

Ainsi, l'invention permet de sentir une tentative d'intrusion ou de démontage du terminal de paiement électronique. En effet, toute tentative en ce sens, dirigée vers une portion du terminal protégée par le dispositif de l'invention provoque une variation de la capacité mesurée au delà d'une valeur prédéfinie et entraîne la transmission de cette information au microprocesseur de sécurité du terminal qui prend les mesures nécessaires (par exemple effacement de la mémoire sécurisée).

Cette invention améliore ainsi la sécurité du terminal de paiement électronique et plus particulièrement participe à une sécurisation active du terminal.

Selon un mode de réalisation particulier, ledit dispositif de protection comprend en outre des moyens de calibrage délivrant ladite capacité de référence.

Selon un mode de réalisation particulier, ledit détecteur capacitif comprend en outre au moins une troisième partie constituée d'au moins un polyèdre recouvert d'une surface conductrice.

Selon une caractéristique particulière, ladite au moins une troisième partie est disposée sur ledit boîtier dudit terminal.

Selon une caractéristique particulière, ladite au moins une troisième partie définie une capacité unique associée audit boîtier dudit terminal.

Selon un autre aspect, l'invention concerne également un procédé de protection d'un terminal de paiement électronique comprenant au moins un circuit imprimé et un boîtier, ledit dispositif de protection comprenant :
- au moins un détecteur capacitif comprenant deux parties, ladite première partie étant reliée électriquement audit circuit imprimé, ladite deuxième partie étant montée au sein dudit boîtier dudit terminal de paiement électronique sans être reliée électriquement à ladite première partie, ledit au moins un détecteur capacitif étant configuré pour délivrer une capacité de référence lorsqu'il est monté dans ledit terminal de paiement électronique ;
- un microprocesseur de mesure capacitive relié électriquement audit au moins un détecteur capacitif, configuré pour détecter une variation de capacité dudit au moins un détecteur capacitif ;
- des moyens de transmission d'une information représentative de ladite variation de capacité, lorsque une valeur absolue d'une différence entre ladite capacité mesurée et ladite capacité de référence excède un seuil prédéterminé.

Selon l'invention ledit procédé de protection comprend au moins une itération des étapes suivantes :
- mesure d'une capacité courante à l'aide dudit détecteur capacitif ;
- calcul de ladite valeur absolue d'une différence entre ladite capacité mesurée et ladite capacité de référence ;
- transmission de ladite information représentative de ladite variation de capacité, lorsque ladite valeur absolue excède ledit seuil prédéterminé. selon un mode de réalisation particulier, ledit procédé comprend en outre,
   lors d'une première mise sous tension dudit terminal de paiement électronique, une étape de calibrage dudit terminal délivrant ladite capacité de référence.

Cette invention améliore ainsi la sécurité du terminal de paiement électronique et plus particulièrement participe à une sécurisation active du terminal.

Selon un autre aspect, l'invention concerne un programme d'ordinateur téléchargeable depuis un réseau de communication et/ou stocké sur un support lisible par ordinateur et/ou exécutable par un microprocesseur. Selon l'invention, un tel programme comprend des instructions de code de programme pour l'exécution du procédé de protection tel que décrit préalablement, lorsqu'il est exécuté sur un microprocesseur.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un schéma d'un dispositif de détection selon l'invention appliqué à une fausse touche ;
- les figures 2 et 3 illustrent un mode de réalisation de l'invention dans lequel le dispositif de détection comprend un détecteur capacitif en deux parties ;
- la figure 4 illustre un mode de réalisation de l'invention dans lequel le dispositif de détection comprend un détecteur capacitif en trois parties ;
- La figure 5 schématise un terminal de paiement selon l'invention.

### 5 DESCRIPTION DETAILLEE DE L'INVENTION

### 5.1 Description d'un mode de réalisation

Le principe de l'invention consiste munir le terminal de paiement électronique d'une aptitude à surveiller son environnement capacitif interne et à mettre en oeuvre des mesures de sécurité basées sur la mesure de capacités.

La mise en oeuvre de telles mesures est plus simple que la mise en oeuvre de multiples dispositifs et procédés de protection, généralement basés à la fois sur une composante mécanique et sur une composante électronique. Au contraire, la mesure de capacité par le terminal de paiement électronique, au niveau d'organes à protéger, est simple et ne nécessite que la pose d'un élément conducteur comme par exemple un fil électrique ou une peinture conductrice.

Dans un mode de réalisation, l'invention permet également de mettre en oeuvre une identification matérielle du terminal qui soit simple et peu coûteuse. L'invention permet également, de gérer des dispositifs anti-intrusion de manière simple et peu coûteuse. L'invention s'appuie sur une mesure capacitive effectuée entre un ou plusieurs détecteurs capacitifs, lesquels sont composés d'au moins deux parties. Ainsi, à la différence des détecteurs capacitifs classiques, permettant de détecter une variation de capacité par exemple lorsque d'un objet est approché d'un détecteur, l'invention propose des détecteurs capacitifs composés de plusieurs parties.

L'invention propose ainsi de détecter une modification de la capacité (c'est-à-dire une modification de la charge électrique) du détecteur lorsqu'une des parties du détecteur est déplacée ou modifiée par rapport l'autre partie du détecteur.

Pour ce faire, le dispositif selon l'invention comprend au moins un détecteur capacitif comprenant deux parties, ladite première partie étant reliée électriquement audit circuit imprimé, ladite deuxième partie étant montée au sein dudit boîtier, ledit au moins un détecteur capacitif étant configuré pour délivrer une capacité de référence. Ce détecteur capacitif comprend une capacité préalablement déterminée et connue d'un microprocesseur de mesure capacitive, relié électriquement au support de mesure capacitive, et configuré pour détecter une variation de capacité du support de mesure capacitive. Le dispositif comprend également des moyens de transmission d'une information représentative de variation de capacité, lorsque une valeur absolue d'une différence entre une capacité mesurée, à un instant donné et la capacité de référence excède un seuil également prédéterminé.

On présente par la suite des modes de réalisation du principe de l'invention. Ces modes de réalisation sont bien entendu combinables au sein d'un seul et même terminal pour disposer de plusieurs mesures de sécurité.

### 5.2 Fausses touches

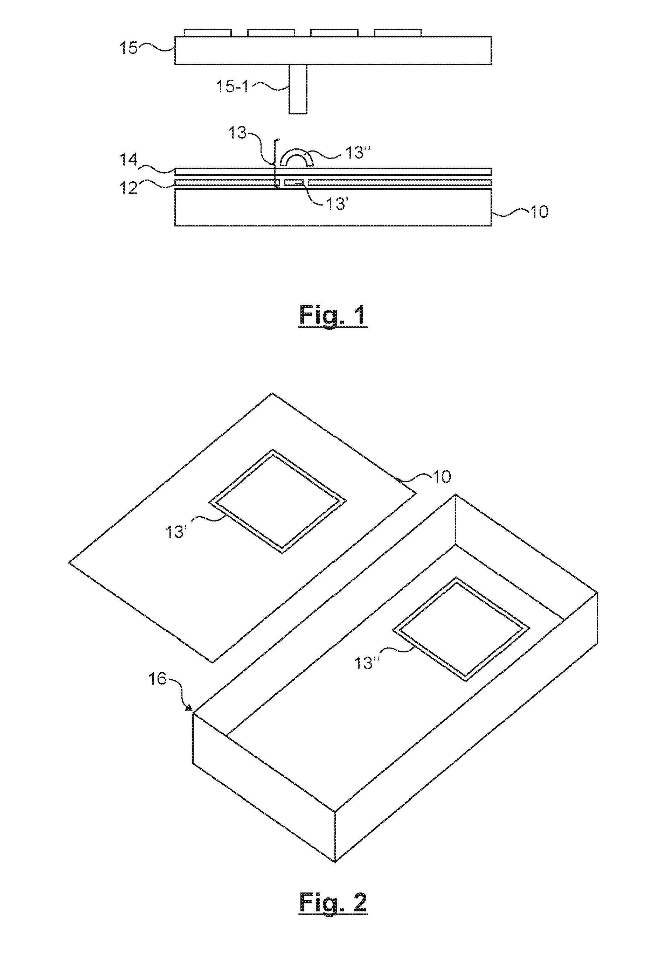

Comme cela a été mentionné préalablement, l'adjonction de fausses touches permet de détecter le démontage du clavier. Les fausses touches sont utilisées pour établir une connexion permanente, par pression, entre le clavier et le circuit imprimé. Usuellement, les fausses touches établissent une connexion électrique qui est surveillée pour détecter l'ouverture. Ce système est relativement complexe à mettre en oeuvre. La mise en ouvre des fausses touches par l'intermédiaire d'un détecteur capacitif en deux parties ne nécessite pas, au contraire, de mise en oeuvre complexe, comme cela est décrit en relation avec la figure 1.

Une fausse touche, selon l'invention, est matérialisée par un « dôme ressort convexe » métallique 13", constituant une deuxième partie du détecteur capacitif en deux parties 13. Ce dôme 13" est monté sur le circuit imprimé 10 qui est positionné dans le terminal. Un plan de masse 12 est dessiné sur le circuit imprimé 10. La première partie 13' du « détecteur capacitif» 13 est positionné sous le dôme 13", entre les parties conductrices du plan de masse. La première partie 13' du « détecteur capacitif » 13 n'est pas électriquement relié au plan de masse, mais elle est reliée électriquement au microprocesseur capacitif (non représenté). La première partie 13' du « détecteur capacitif » 13 et le plan de masse 12 sont enterrés sous une couche de prepreg + FR4 vernis seul 14 bien connu de l'homme du métier.

Le clavier 15 est pour sa part muni d'une butée poussoir 15-1. Lors du montage, cette butée poussoir 15-1 écrase le dôme 13'. La capacité de référence est alors enregistrée lors de la première mise sous tension du terminal de paiement électronique. Cette capacité de référence correspond à celle du terminal lorsqu'il est assemblé.

Si le clavier du terminal est démonté, le dôme 13' reprend sa forme initiale ce qui entraîne une modification de la capacité et donc une détection de l'ouverture. Ainsi, selon l'invention, il n'est pas nécessaire de prévoir une connexion électrique du dôme 13' avec le circuit imprimé 10, ce qui simplifie grandement la mise en oeuvre.

### 5.3 Division du « détecteur capacitif » en deux parties

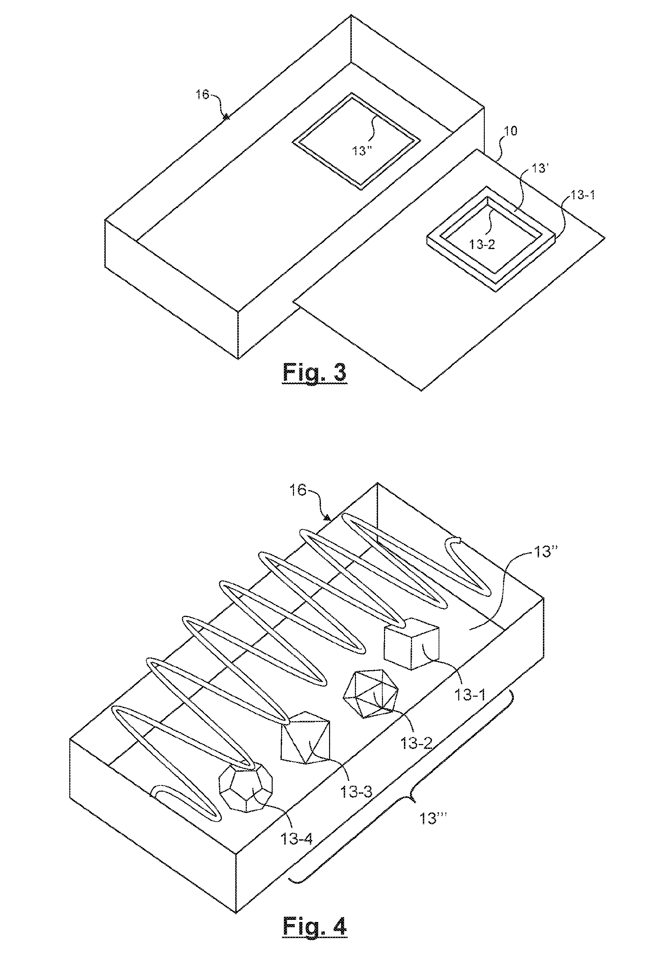

On décrit, en relation avec les figures 2 et 3 un mode de réalisation de l'invention dans lequel le « détecteur capacitif » est composé de deux parties.

Dans ce mode de réalisation de l'invention, une première partie 13' du « détecteur capacitif » 13 est directement intégrée au circuit imprimé 10 comme une piste de celui-ci. Dans un mode de réalisation alternatif (figure 3) la première partie du détecteur capacitif 13 est déporté sur un support 13-1, lui-même collé sur le circuit électronique intégré 10 auquel la première partie 13' du détecteur capacitif 13 est reliée électriquement (13-2).

Une surface conductrice, qui constitue la deuxième partie 13" du détecteur capacitif 13 est disposée sur le boîtier 16 du terminal. A la fermeture du terminal cette deuxième partie 13" est positionnée contre la première partie 13' du « détecteur capacitif » 13.

Le première partie 13' et la deuxième partie 13" du détecteur capacitif 13 peuvent être recouvertes d'un matériel isolant ou directement coulé dans le plastique, ils n'ont pas besoin d'être en contact direct c'est-à-dire qu'il n'est pas nécessaire que les première 13' et deuxième parties 13" et conductrices du « détecteur capacitif » 13 soient en contact. Il est ainsi envisageable de laisser un espace entre les deux.

En cas d'ouverture du terminal la valeur de la capacité mesurée par le « détecteur capacitif» 13 est fortement modifiée par rapport à la valeur de référence et l'ouverture du terminal est détectée. Les mesures de sécurité adéquates sont alors mises en oeuvre (effacement de la mémoire du terminal ou uniquement effacement de la mémoire sécurisée).

Les parties du « détecteur capacitif » sont constituées d'une surface conductrice. Un simple fil suffit pour réaliser ces surfaces connectées.

### 5.4 Anti-intrusion volumique avec schéma d'identification unique

Dans ce mode de réalisation de l'invention présenté en relation avec la figure 4, visant d'une part à éviter l'ouverture du terminal de paiement électronique et d'autre part à rendre très peu probable toute tentative d'écoute par des moyens d'écoute conventionnels, le détecteur capacitif 13 est également composé de plusieurs parties (13', 13" et 13"').

Comme dans le mode de réalisation précédent, la première partie 13' du « détecteur capacitif » 13 est directement intégrée au circuit imprimé 10 comme une piste de celui-ci (ou déportée sur un support) comme indiqué en figure 2 et 3.

Le fond du boîtier 16 est recouvert d'une peinture (ou surface) conductrice reliée à la masse. Cette surface conductrice qui s'étend au fond du boîtier constitue la deuxième partie du détecteur capacitif 13". Le fait que cette deuxième partie du « capteur capacitif» 13" soit relié à la masse offre des avantages importants.

Grâce à l'effet cage de Faraday le volume défini par la peinture ou la surface conductrice est isolé des perturbations électromagnétiques extérieures. De plus les variations de mesures de capacité du détecteur capacitif sont facilement identifiables.

Ce système réduit également fortement les possibilités d'écoutes électromagnétiques des données confidentielles (PIN, etc.). Le volume surveillé est donc clairement délimité et déterminé par les plans de masse.

Des polyèdres avec surface conductrice sont également disposés dans le boîtier. Ces polyèdres constituent la troisième partie 13''' du détecteur capacitif 13. Ces polyèdres (13-1 à 13-4) peuvent être partie intégrante du boîtier ou collés de manière définitive. Ces polyèdres servent à identifier le boîtier de façon à lier un boîtier à un circuit imprimé unique. Cette technique est appelée « identification par pattern volumique ».

Ainsi, outre leur fonction anti-intrusive, la troisième partie du détecteur capacitif 13''' remplit une fonction d'identification du boîtier et permet d'apporter un niveau de sécurité supplémentaire.

En effet, le fait de modifier ces polyèdres (par exemple leur forme) ou leurs emplacements modifie de façon significative les lignes de champ et donc la valeur de la capacité mesurée par le processeur capacitif. Ainsi, si l'on essaie de remonter un terminal à partir de plusieurs composants d'autres terminaux, et notamment à partir d'un nouveau boîtier, le terminal « remonté ».

Pour remonter un terminal complet un attaquant ne pourra pas réutiliser un boîtier neuf quelconque ; il faudra qu'il utilise exactement la même combinaison de polyèdres et pour cela il faudra qu'il connaisse cette combinaison. Il est aisé, pour le fabricant de terminal de faire varier la forme, l'épaisseur, l'emplacement de façon à avoir un grand nombre de combinaisons possibles et donc rendre quasi nulle la probabilité que l'attaquant puisse recréer l'environnement capacitif initial du terminal de paiement électronique. Ainsi, même si l'attaquant réussi à remonter un terminal, celui-ci sera inutilisable.

Ces polyèdres ne sont cependant pas indispensables à la fonction d'anti-intrusion en tant que telle. Les polyèdres supplémentaires sont utilisés pour rendre unique le terminal, à un coût marginal par rapport à une adjonction de puces tag RAID.

Une ouverture ou une intrusion par un très petit objet en partie conducteur (voir même par un composant diélectrique sous certaines conditions) est détectée et identifiée comme « attaque », ayant pour conséquence de mettre le terminal en mode « attaque » (et entraîner un effacement des données confidentielles qu'il contient).

Le détecteur capacitif peut être constitué d'une simple piste conductrice, un simple fil suffit. Il peut également être recouvert d'un film plastique ou coulé dans le support plastique de la coque du terminal.

Cette dernière technique peut s'appliquer au terminal complet ou à des volumes spécifiques du terminal.

Un autre avantage de cette technique basée sur un détecteur capacitif en trois parties est de limiter très fortement les émissions électromagnétiques du système électronique du terminal électronique de paiement rendant une écoute des données confidentielles très improbable et s'affranchissant aussi des perturbations environnementales électromagnétiques grâce à un système de plan de masse (principe de la cage de Faraday).

De plus ce système en parallèle du système de compensation environnemental (voir ci-dessous) protège efficacement contre des détections « d'attaque » intempestives et inappropriés dues à des changements environnementaux subits (ex : réception d'un appel par un téléphone portable posé sur ou à côté du terminal, etc.) causant la perte de clés secrètes du terminal. En effet, ces pertes de clés entraînent un coût de maintenance important qu'il convient d'éviter, particulièrement lorsque le terminal de paiement est le seul terminal installé dans un point de vente.

### 5.5 Paramétrage initial

Pour pouvoir rendre le service escompté, le dispositif de l'invention doit être paramétré afin de déterminer la valeur prédéterminée de la capacité de référence. Cette capacité de référence permet, comme cela a déjà été explicité, de contrôler la variation de capacité au cours du temps et de déterminer si cette variation excède une valeur prédéterminée.

A la première mise sous tension du terminal de paiement électronique au sein duquel le dispositif de l'invention est monté, une mesure de calibrage et un paramétrage est réalisé afin d'identifier la valeur de référence, au repos dans un environnement électromagnétique neutre, de la capacité du détecteur capacitif.

Par la suite ce calibrage initial établit la capacité de référence. En mode de fonctionnement standard, une variation de la capacité mesurée par rapport à a capacité de référence est bien entendu admise, pour permettre un fonctionnement normal du terminal de paiement électronique.

Une valeur dite « delta » fixe les limites supérieures et inférieures dans lesquelles les capacités mesurées seront considérées comme valides. Les mesures sont effectuées périodiquement, soit à intervalle régulier, soit à des horaires prédéfinis (comme la nuit par exemple).

En cas de coupure de l'alimentation électrique provenant du secteur, les organes de sécurité du terminal continuent de fonctionner sur batterie. Dans ce cas un système d'endormissement et de réveil périodique du processeur « capacitif » permet une mesure régulière des détecteurs capacitifs (comme par exemple toutes les 500 millisecondes).

En effet, comme le dispositif de l'invention consomme très peu de courrant électrique, il peut être mis en oeuvre sans la présence d'une alimentation électrique en provenance du secteur. Ainsi, le système de l'invention peut assurer la sécurité du terminal de façon continu avec ou sans la présence du courant secteur.

Sous certaines conditions strictes, un système de compensation environnemental peut modifier la valeur de référence (Baseline). Un tel système peut être adjoint au dispositif de l'invention pour assurer un bon fonctionnement du terminal de paiement électronique en fonction de l'environnement dans lequel il est installé.

Un filtrage logiciel est également effectué pour discriminer les événements modifiant les lignes de champ qui ne sont pas des déposes réelles de dispositifs frauduleux (manipulations du terminal, etc.).

Toutes les mesures sont pilotées par l'intermédiaire d'un microprogramme associé au microprocesseur de mesure capacitive.

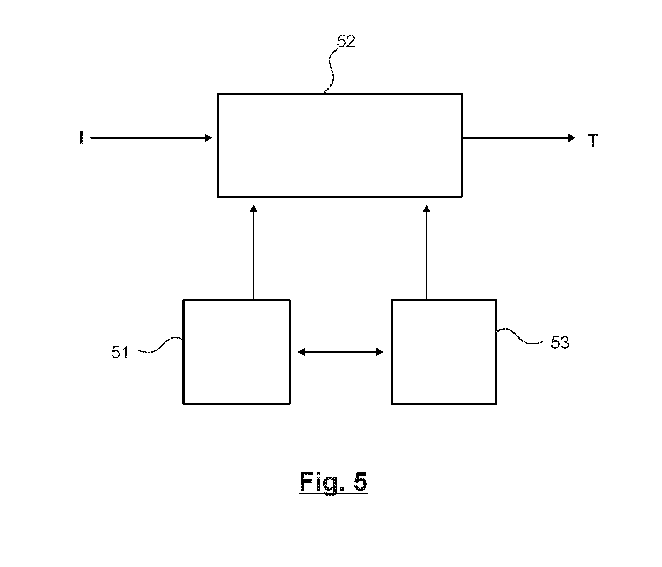

On présente, en relation avec la figure 5, un mode de réalisation d'un terminal de paiement selon l'invention.

Un tel terminal comprend une mémoire 51 constituée d'une mémoire tampon, une unité de traitement 52, équipée par exemple d'un microprocesseur P, et pilotée par le programme d'ordinateur 53, mettant en oeuvre le procédé de protection selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins une information I, telle que des identifiants de zones de localisation. Le microprocesseur de l'unité de traitement 52 met en oeuvre les étapes du procédé de protection décrit précédemment, selon les instructions du programme d'ordinateur 53, pour délivrer une information traitée T, telle que la détection d'une attaque entraînant la suppression des données protégées. Pour cela, le terminal comprend, outre la mémoire tampon 51 :
- au moins un détecteur capacitif comprenant deux parties, ladite première partie étant reliée électriquement audit circuit imprimé, ladite deuxième partie étant montée au sein dudit boîtier dudit terminal de paiement électronique sans être reliée électriquement à ladite première partie, ledit au moins un détecteur capacitif étant configuré pour délivrer une capacité de référence lorsqu'il est monté dans ledit terminal de paiement électronique ;
- un microprocesseur de mesure capacitive relié électriquement audit au moins un détecteur capacitif, configuré pour détecter une variation de capacité dudit au moins un détecteur capacitif ;
- des moyens de transmission d'une information représentative de ladite variation de capacité, lorsque une valeur absolue d'une différence entre ladite capacité mesurée et ladite capacité de référence excède un seuil prédéterminé.

Ces moyens sont pilotés par le microprocesseur de l'unité de traitement 52.

## Revendications

1. Dispositif de protection d'un terminal de paiement électronique, ledit terminal de paiement électronique comprenant au moins un circuit imprimé (10) et un boîtier, ledit dispositif de protection comprenant :
- au moins un détecteur capacitif (13) comprenant deux parties (13', 13"), ladite première partie (13') étant reliée électriquement audit circuit imprimé (10), ladite deuxième partie (13") étant montée au sein dudit boîtier dudit terminal de paiement électronique sans être reliée électriquement à ladite première partie (13'), ledit au moins un détecteur capacitif (13) étant configuré pour délivrer une capacité de référence lorsqu'il est monté dans ledit terminal de paiement électronique ;
- un microprocesseur de mesure capacitive relié électriquement audit au moins un détecteur capacitif, configuré pour détecter une variation de capacité dudit au moins un détecteur capacitif ;
- des moyens de transmission d'une information représentative de ladite variation de capacité, lorsqu'une valeur absolue d'une différence entre ladite capacité mesurée et ladite capacité de référence excède un seuil prédéterminé
ledit dispositif de protection étant **caractérisé en ce qu'**il comprend en outre au moins une troisième partie (13''') constituée d'au moins un polyèdre (13-1,...,13-4) recouvert d'une surface conductrice.

2. Dispositif de protection selon la revendication 1, **caractérisé en ce qu'**il comprend en outre des moyens de calibrage délivrant ladite capacité de référence.

3. Dispositif de protection selon la revendication 1, **caractérisé en ce que** ladite au moins une troisième partie (13''') est disposée sur ledit boîtier dudit terminal.

4. Dispositif selon la revendication 1, **caractérisé en ce que** ladite au moins une troisième partie définie une capacité unique associée audit boîtier dudit terminal.

5. Procédé de protection d'un terminal de paiement électronique, ledit terminal de paiement électronique comprenant au moins un circuit imprimé (10) et un boîtier, ledit procédé de protection mettant en oeuvre un dispositif de protection comprenant :
- au moins un détecteur capacitif (13) comprenant deux parties (13', 13"), ladite première partie (13') étant reliée électriquement audit circuit imprimé (10), ladite deuxième partie (13") étant montée au sein dudit boîtier dudit terminal de paiement électronique sans être reliée électriquement à ladite première partie (13'), ledit au moins un détecteur capacitif (13) étant configuré pour délivrer une capacité de référence lorsqu'il est monté dans ledit terminal de paiement électronique ;
- un microprocesseur de mesure capacitive relié électriquement audit au moins un détecteur capacitif, configuré pour détecter une variation de capacité dudit au moins un détecteur capacitif ;
- des moyens de transmission d'une information représentative de ladite variation de capacité, lorsqu'une valeur absolue d'une différence entre ladite capacité mesurée et ladite capacité de référence excède un seuil prédéterminé,
- au moins une troisième partie (13''') constituée d'au moins un polyèdre (13-1,...,13-4) recouvert d'une surface conductrice.
ledit procédé de protection étant **caractérisé en ce qu'**il comprend au moins une itération des étapes suivantes :
- mesure d'une capacité courante à l'aide dudit détecteur capacitif (13) ;
- calcul de ladite valeur absolue d'une différence entre ladite capacité mesurée et ladite capacité de référence ;
- transmission de ladite information représentative de ladite variation de capacité, lorsque ladite valeur absolue excède ledit seuil prédéterminé.

6. Procédé selon la revendication 6, **caractérisé en ce qu'**il comprend en outre, lors d'une première mise sous tension dudit terminal de paiement électronique, une étape de calibrage dudit terminal délivrant ladite capacité de référence.

7. Terminal électronique de paiement **caractérisé en ce qu'**il comprend au moins un dispositif de protection selon l'une quelconque des revendications 1 à 4.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de protection selon l'une au moins des revendications 5 et 6, lorsqu'il est exécuté sur un microprocesseur.
